(19) Europäisches Patentamt
European Patent Office
Office européen des brevets

(11) EP 1 670 846 B1

(12) EUROPEAN PATENT SPECIFICATION

(45) Date of publication and mention of the grant of the patent:
**25.03.2009 Bulletin 2009/13**

(21) Application number: **04766350.5**

(22) Date of filing: **28.07.2004**

(51) Int Cl.:
***C08G 63/00*** *(2006.01)* ***C08G 83/00*** *(2006.01)*

(86) International application number:
**PCT/EP2004/051641**

(87) International publication number:
**WO 2005/030832 (07.04.2005 Gazette 2005/14)**

# (54) 1-VINYLPYRROLIDIN-2-ONE/ ESTER COPOLYMERS

1-VINYLPYRROLIDIN-2-ON/ESTER COPOLYMERE

COPOLYMERES D'ESTER 1-VINYLPYRROLIDIN-2-ONE/

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **30.09.2003 IT MI20031872**

(43) Date of publication of application:
**21.06.2006 Bulletin 2006/25**

(73) Proprietor: **Mediolanum Farmaceutici S.p.A.**
**20143 Milano (IT)**

(72) Inventors:
- **FERRUTI, Paolo**
**I-20145 Milan (IT)**
- **RANUCCI, Elisabetta**
**I-20090 Opera (IT)**

(74) Representative: **Gervasi, Gemma et al**
**Notarbartolo & Gervasi S.p.A.**
**Corso di Porta Vittoria, 9**
**20122 Milano (IT)**

(56) References cited:
**WO-A-03/008480** **US-A- 4 526 938**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 670 846 B1

## Description

### Field of the invention

The present invention relates to 1-vinylpyrrolid in-2-one/ ester copolymers.

### Background of the invention

Controlled release drug systems based on biodegradable polymers, in the form of thin layers, needles, micro- and nanospheres, are acquiring ever greater importance due to their ease of use and elimination of the problem of their explantation after the drug has depleted. In this respect, the matrices can be programmed to break down after a certain time into bioeliminable and non-toxic products, with consequent complete elimination from the body via normal excretion paths.

This technique is used principally for peptides and proteins with potentially great therapeutic usefulness, but if administered as such would have an extremely brief average lifespan within the body, thus prejudicing their applicability in practise.

Among these proteic drugs there are many however which give or would give excellent results if inserted in controlled release systems, thus ensuring their release into the organism with controlled kinetics such as to even out their elimination rate, hence maintaining them at an optimum concentration in biological fluids for long periods.

The biodegradable polymers which comprise the most frequently used controlled release systems are polyester based, among which of particular importance are copolymers of glycolic acid and lactic acid, currently known as PLGA. Less frequently considered are polyesters different from PLGA, polycarbonates, polyanhydrides, polyorthoesters etc.

One problem which frequently presents itself in biodegradable controlled release systems which incorporate proteic drugs is the poor affinity of these latter for the matrix in which they are incorporated, with which they have scant or no chemical or physical interactions. This entails on the one hand difficulty with homogenous dispersion in the matrix, and on the other hand serious irregularities in release kinetics. In particular, a phenomenon known as "out-burst" can occur, consisting of the virtually immediate release of a part of the drug after insertion into the body of the biodegradable device containing it.

Out-burst is damaging in two ways. On the one hand, a substantial part of the drug is lost in order to maintain an optimum therapeutic level over time, because by detaching rapidly it is also rapidly eliminated. On the other hand, rapid intake of relatively substantial levels of the drug into the body can lead to undesirable side effects.

The out-burst phenomenon is due to the fact that part of the drug, not being very compatible (i.e. miscible) with the matrix, accumulates near its surface instead of dispersing uniformly within the device, and hence detaches rapidly therefrom.

It appears evident that an objective need exists to study new biodegradable matrices which, on degrading, transform into bioeliminable and definitely non-toxic products while at the same time having a greater affinity with peptidic or proteic drugs.

The ability of poly-N-vinylpyrrolidinone, or polyvinylpyrrolidone as it is commonly known, hereinafter abbreviated to PVP, to complex with many substances and its non-toxicity are well known. Due to its properties, this polymer is widely used as an ingredient in many food and pharmaceutical applications, for external or oral use.

This polymer is in particular characterized by having the following formula:

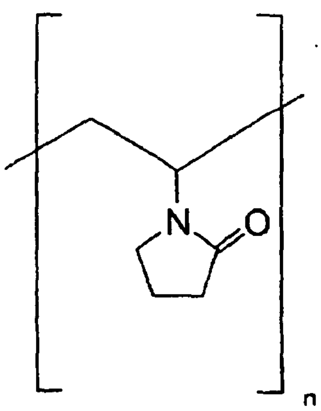

In the past, high molecular weight PVP was widely used in medicine also for systemic use, in particular (in aqueous solution) as a plasma substitute.

This use, however, and all internal uses of high molecular weight PVP, were terminated because it was discovered that this polymer is not biodegradable, and if of high molecular weight, i.e. above the threshold of renal filtration (which for PVP is around a molecular weight of 40,000) it is no longer eliminated and remains in the body indefinitely, where however it has never given rise to toxic effects of any kind.

Recently however synthesis methods have been established to obtain oligomeric PVPs of molecular weights between 1,000 and 10,000, well below the renal elimination threshold, and bearing at one end a carboxyl (also in the form of a methyl or ethyl ester), or hydroxyl function (F. M. Veronese, L. Sartore, P. Caliceti, O. Schiavon, E. Ranucci, P. Ferruti, J. Bioact. Compat. Polym. 1990, 5, 167; P.Caliceti, O. Schiavon, F.M. Veronese, L. Sartore, E. Ranucci, R. Ferruti, J. Bioact. Compat. Polym. 1995, 10, 103; E. Ranucci, G. Spagnoli, F. Bignotti, L. Sartore, P. Ferruti, P. Caliceti, O. Schiavon, F.M. Veronese, Macromol. Chem. Phys., 1995, 196, 763).

These copolymers are in particular characterised by having the following formulas:

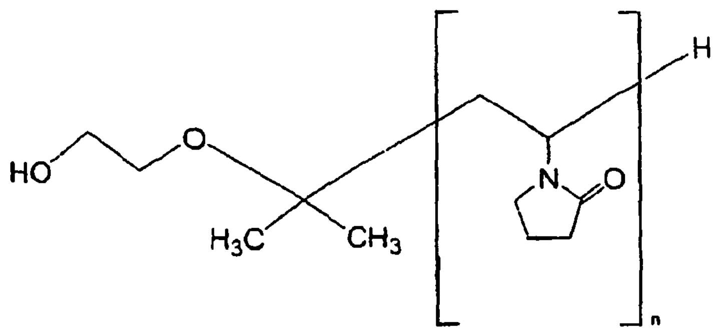

In addition, a lactone function has also been inserted using the same technique (M. Tarabic, E. Ranucci, Macromol. Biosci. 2001, 1, 126).

US 452 6958 describes block copolymers comprising hydrophobic polyester segments and hydrophilic PVP-segments.

## Summary of the invention

An aspect of the present patent application consists of biodegradable and completely bioeliminable polymer products in the form of polyesters modified by the introduction of short PVP chains wherein the PVP segments have a weight average molecular weight between 6000 and 15000, which ensure their high affinity with a number of traditional or proteic drugs. More specifically it concerns polyesters to which the oligomeric PVPs are linked by means of ester bond, and therefore by definition resolvable in the body. This ensures complete biodegradability of the new materials, which, once inserted into the body are transformed over time into simple acids and alcohols and into the starting oligomeric PVPs, these being easily bioeliminable.

The invention also relates to processes for preparing the copolymers and compositions containing them.

## Brief description of the figure

Figure 1 reports a schematic representation of the formula of branched or hyperbranched copolymers according to the present invention wherein the PVP segments are located at the terminal ends of the branches

Figure 2 reports a schematic representation of the branched or hyperbranched copolymers according to the present invention having PVP segments and residues derived from monocarboxylic acids or monohydroxylated alcohols.

## Detailed description of the invention

The invention therefore provides segment copolymers in which segments "A" of polyvinylpyrrolidone (PVP) structure and segments "B" of polyester structure are present.

Said copolymers can assume various configurations, being present for example in the form of linear copolymers

in two blocks, of A-B type, with structure of the type:

$$PVP\text{-}COO\text{-}(R^3\text{-}COO)_nH,$$

where n is a number between 5 and 500, preferably between 15 and 150, and $R^3$ is a linear or branched hydrocarbon chain containing from 1 to 12 carbon atoms, preferably from 1 to 6 carbon atoms;
or with structure of the type

$$PVP\text{-}(OOC\text{-}R^3)_nOH,$$

where n is a number between 5 and 500, preferably between 15 and 150, and $R^3$ is a linear or branched hydrocarbon chain containing from 1 to 12 carbon atoms, preferably from 1 to 6 carbon atoms.

Alternatively, the copolymers of the invention can be of the linear type in three blocks, of A-B-A type, in particular of formula:

$$PVP\text{-}COO\text{-}(R^1\text{-}OOCR^2COO)_n\text{-}R^1\text{-}OOC\text{-}PVP,$$

where n is a number between 5 and 300, preferably between 10 and 100, and $R^1$ and $R^2$, equal or different, are linear or branched hydrocarbon chains containing from 1 to 25 carbon atoms, preferably from 1 to 8 carbon atoms; or of formula:

$$PVP\text{-}(OOC\text{-}R^1\text{-}COOR^2)_nOOCR^1COO\text{-}PVP,$$

where n is a number between 5 and 300, preferably between 10 and 100, and $R^1$ and $R^2$ are as aforedescribed.

Again, the copolymers of the invention can be branched or hyper-branched, with the PVP segments located at the terminal ends of the branches. A schematic and explanatory illustration of this type of copolymer is given in Figure 1, wherein A is polyvinylpyrrolidone, D is the residue deriving from a polycarboxylic or polyol, wherein the hydroxy or carboxy functions are at least 3, (BC) indicate the repeating unit of the B polyester segment and n is comprised between 2 and 200 At the ends of the branches can be located either PVP segments or residues derived from monocarboxylic acids R-COOH or monohydroxylated alcohols of the R-OH type where R is a linear or branched hydrocarbon chain containing from 1 to 25 carbon atoms, preferably from 1 to 8 atoms. A schematic and explanatory illustration of this type of copolymer is given in Figure 2, wherein A indicates the polyvinylpyrrolidone chains, D is the residue deriving from a polycarboxylic or polyol, said hydroxylic or carboxylic functions being at least 3, (BC) indicate the repeating unit of the B polyester segment n is comprised between 2 and 200, and E is the residue of a monofunctional alcohol.

Alternatively, at the ends of the branches can be located either PVP segments or residues derived from dicarboxylic acids HOOC-R-COOH or dihydroxylic alcohols of the HO-R-OH type where R is a linear or branched hydrocarbon chain as aforedefined.

The branching sites consist preferably of polyol or polycarboxylic acid residues having a number of functions (hydroxyl or carboxyl respectively) between 3 and 12, preferably between 3 and 6.

The molar ratio between the number of branching sites and polyester fragments is a number between 0.01 and 2, preferably between 0.1 and 1.5 while the molar ratio between the number of branching sites and PVP fragments is a number between 0.01 and 100, preferably between 0.1 and 10.

If desired, the copolymers of the invention, whether branched or hyper-branched, can be cross-linked by forming a certain number of connections between chains, thus rendering them insoluble and infusible.

Finally the copolymers can present the PVP segments comb-grafted at one end onto the polyester chains.

The copolymers of the invention have their PVP segments of molecular weight between 600 and 15,000, preferably between 1,000 and 6,000 and a PVP content by weight of between 5% and 95%, preferably between 10% and 50%.

The average molecular weight of the copolymers is between 10,000 and 1,000,000, preferably between 20,000 and 200,000.

The copolymers of the invention can be prepared by known methods. For example, with hydroxylated or carboxylated PVP the preparation process consists of modifying a classical multifunctional polycondensation process by introducing into the monomer mixture monofunctional compounds, and, in particular, PVP oligomers functionalised at one end, as aforedescribed.

The theoretical considerations which form the basis of the process are given in the following paragraphs.

In all polycondensations which involve monomers with complementary functions of type "*a*" and "*b*", for example diacids and diols, two parameters can be defined which govern the progress thereof. One of these is the initial stoichiometric ratio between the two types of functions, indicated by "*r*", in which by convention the deficiency functions are named "*a*" and are placed as numerator:

$$r=Na_0/Nb_0$$

where the subscript "0" indicates that it concerns the initial conditions. It is evident that *r* is by definition 5 1.

The other parameter is the extent of reaction, indicated by "*p*" which is calculated on the deficiency functions and defined as:

$$p=Na_0-Na/Na_0$$

where *Na* indicates the number of functions of type "*a*" present at the moment of observation. The parameter *p* is therefore also by definition ≤ 1.

It can be noted that a polycondensation that totally or partially involves monomers with functionality greater than 2 (multi- or polyfunctional polycondensation) can give rise, above a certain *p* value, known as the "critical extent of reaction" and indicated as "$p_c$", to cross-linked and insoluble products. Above this extent of reaction the system loses its mobility and thus $p_c$ is also called "gelation point". The critical extent of reaction $p_c$, which corresponds to the gelation point, is given by the Flory and Stockmayer formula:

$$p_c=\frac{1}{\{r[1+\rho(f-2)]\}^{1/2}} \quad (1)$$

where $\rho$ is the fraction of functions "*a*" belonging to the monomer with functionality > 2 (known as $a^f$) over the total functions of the same type (known as $a_0$):

$$\rho=\frac{a^f}{a_0} \quad (2)$$

and *r,* as before, is the initial stoichiometric ratio, calculated as usual by placing as numerator the lesser function, whether or not it contains a multifunctional quota.

It is apparent that in (1) *p* (and therefore also $p_c$ ) and *r* are in mutual correspondence. In particular, a critical stoichiometric ratio $r_c$ will exist above which the system can gel, but below which the system is unable to gel. At values of $r < r_c$ whatever the value of *p,* a branched but not cross-linked polymer is obtained which is therefore as a rule fusible and soluble in suitable solvents.

The value of $r_c$ is obtained logically by putting $p_c$ equal to 1. In this respect, by definition it is not given that *p* (and therefore also $p_c$) exceeds the value of 1. By therefore putting *p* =1 and solving (1) for *r:*

$$r_c=\frac{1}{1+\rho(f_A-2)} \quad (3)$$

and, if *p*=1, i.e. if the polyfunctional monomer is the only one with that type of function, equation (3) reduces to:

$$r_c = \frac{1}{f-1}$$

**(4)**

It is to be recognised that (1) does not apply where monofunctional compounds are present. For these systems an alternative formula has been elaborated which is also valid where monofunctional compounds are present.

$$p_c = \frac{1}{\left[r(f_{W,A}-1)(f_{W,B}-1)\right]^{1/2}}$$

where $f_{WA}$ and $f_{WB}$ are the "weight" averages of the functionalities of the monomers present, including monofunctionals, defined thus:

$$f_{W,A} = \frac{\sum f_{A,j}^2 N_{A,j}}{\sum f_{A,j} N_{A,j}} \; ; \; f_{W,B} = \frac{\sum f_{B,j}^2 N_{B,j}}{\sum f_{B,j} N_{B,j}}$$

where "$f_{A,j}$" and "$f_{B,j}$" represent respectively the functionality of each monomer of type "A" and type "B", and $N_{A,j}$ and $N_{B,j}$ their respective number of moles in the system (see for example: G. Odian "Principles of Polymerization" 3rd Ed, John Wiley & Sons, USA, 1991)

In this case, again, a critical ratio $r_c$ can be defined above which the system gels, but below which the system is unable to gel. This can be determined by putting $p_c$ equal to 1. Thus:

$$r_c = \frac{1}{(f_{W,A}-1)(f_{W,B}-1)}$$

**(6)**

An aspect of the present invention is the synthesis, starting from monofunctionalised PVP oligomers, of polycondensates modified with PVP which, even at the maximum extent of reaction, are, according to convenience, either hyper-branched, but not cross-linked and therefore still fusible and soluble, or more or less cross-linked.

This result is obtained by suitably measuring the reagents so that the value of $r$ is respectively lower or higher than $r_c$ as defined in equation (6), using for this purpose the addition of monofunctional compounds (among which are necessarily, but not exclusively, PVP oligomers functionalised at one end) to polyfunctional polycondensation systems (for example, but not exclusively, polyfunctional polyesterifications).

In these systems, for the purposes of the present invention, oligomeric PVPs functionalised at one end with a hydroxyl or carboxyl group (also in the form of a methyl or ethyl ester) are used as monofunctional comonomers (macromonomers), diols or dicarboxylic acids are used as bifunctional comonomers, and polyols or polycarboxylic acids are used as multifunctional comonomers.

This technique allows products to be obtained with the character of polyester-PVP block copolymers with hyper-branched molecular architecture, whereby segments of polyvinylpyrrolidone structure are located at the ends of branches, in effect "closing" them.

It is therefore possible, starting from PVP oligomers monofunctionalised at one end, to obtain copolymers in which many PVP segments are present per molecule, while from the same oligomers, in a conventional linear polycondensation involving diols and dicarboxylic acids, only two PVP segments per polymer chain could be introduced.

By introducing monoacids and monoalcohols as comonomers next to the monofunctionalised PVP oligomers, some of the branches will be terminated by residues thereof, and some by PVP segments. This signifies that the weight quantity of PVP of the products can be varied within wide limits.

With this technique, very high molecular weight products can be easily obtained, while still soluble and fusible. This is achieved provided that the initial molar ratio between monomers approaches the critical ratio $r_c$ without exceeding it.

Alternatively, cross-linked products which are insoluble but still swellable in water by virtue of their PVP content can be obtained provided that the initial molar ratio between the monomers exceeds the critical ratio $r_c$.

In particular the aforementioned branched or hyperbranched copolymers having the PVP segments located at the terminal ends of the branches, are prepared effecting polycondensation of the mixtures in variable proportions of:

a) PVPs monofunctionalized at one end with hydroxyl or carboxyl groups optionally in the form of methyl or ethyl esters;
b) dicarboxylic acids and diols;
c) polyols or polycarboxylic acids having at least 3 hydroxyl or carboxyl functions, provided that:

i) when said copolymers are not crosslinked
"$r$" is < $r_c$

ii) when said copolymers are crosslinked
"$r$" is > $r_c$

In particular the branched or hyperbranched copolymers having located at the ends of the branches PVP segments and residues derived from monocarboxylic acids R-COOH, or monohydroxylated alcohols of the R-OH type where R is a linear or branched hydrocarbon chain containing from 1 to 25 carbon atoms, are prepared with a process which comprises effecting a a polycondensation of mixtures in various proportions of:

a) PVPs monofunctionalized at one end with hydroxyl or carboxyl groups optionally in the form of methyl or ethyl esters;
b) dicarboxylic acids and diols;
c) polyols or polycarboxylic acids having at least 3 hydroxyl or carboxylic functions
d) monocarboxylic acids of type R-COOH or monohydroxylated alcohols of type ROH, where R has the aforementioned meanings, provided that:

i) when said copolymers are not crosslinked
"$r$" is < $r_c$

ii) when said copolymers are crosslinked
"$r$" is > $r_c$

Preferably in the aforementioned processes:

- the diols and the diacids are of respectively general formula $HOOC-R^1-COOH$ and $HO-R^2-OH$, where $R^1$ and $R^2$, equal or different, are linear or branched hydrocarbon chains containing from 1 to 25 more preferably from 1 to 8 carbon atoms;
- the polyols or polycarboxylic acids have respectively per molecule between 3 and 12, preferably between 3 an d 6 hydroxyl or carboxyl functions.

It is also possible to proceed in the opposite direction, by progressively reducing the $p$ ratio to obtain products which are ever less branched.

If polyfunctional monomers are not introduced into the reaction mixture, $p = 0$. This signifies the presence of bifunctional polycondensation, and that the polymers obtained do not bear branches and are hence linear. Introducing into the monomer mixture some monofunctionalized PVP oligomers, these will constitute chain terminals, and two-segment linear copolymers of A-B type will be obtained, of which one (A) has PVP character and the other (B) has polyester character, or three-segment linear copolymers of ABA type, with the PVP segments located at the two ends.

In particular the copolymers of A-B type according to the present invention are prepared with a process comprising effecting a polycondensation reaction on PVP terminated at one end with a hydroxy or carboxy function with respectively :

- a biacid or a bialcohol in the presence of a monoalcohol or a monocarboxylic acid or in alternative
- a hydroxy carboxylic acid or optionally a cyclic derivative thereof,

with the proviso that ratio of total moles of OH function /total moles of COOH functions is =1.

For example, to prepare copolymers of formula

$$PVP\text{-}COO\text{-}(R^3\text{-}COO)_nH$$

or of formula

$$PVP\text{-}(OOC\text{-}R^3)_nOH,$$

polycondensation is undertaken between PVPs monofunctionalized at one end with hydroxyl or carboxyl groups (also in the form of methyl or ethyl esters) and hydroxycarboxylic acids of type

$$HO\text{-}R^3\text{-}COOH$$

where $R^3$ is a linear or branched hydrocarbon chain with carbon atoms numbering between 1 and 12, preferably between 1 and 6.

Alternatively, ring-opening polymerisation is effected, initiated by PVP monofunctionalised at one end with hydroxyl or carboxyl groups (also in the form of methyl or ethyl esters) and involving cyclic derivatives, such as lactones, glycolides or lactides, of the hydroxyacids HO-$R^3$-COOH.

In particular the copolymers of ABA type are prepared with a process comprising effecting a polycondensation reaction on PVP terminated at one end with a hydroxyl or carboxyl function with a biacid or a bialcohol with the proviso that the ratio of total moles of OH function/total moles of COOH functions is =1.

For example for preparing the copolymers wherein the structure is of the type

$$PVP\text{-}COO\text{-}(R^1\text{-}OOCR^2COO)_n\text{-}R^1\text{-}OOC\text{-}PVP,$$

or of the type:

$$PVP\text{-}(OOC\text{-}R^1\text{-}COOR^2)_nOOCR^1COO\text{-}PVP$$

where n is a number between 5 and 300, preferably between 10 and 100, and $R^1$ and $R^2$ can be equal or different, and are linear or branched hydrocarbon chains having from 1 to 25, preferably from 1 to 8 carbon atoms,said polycondensation reaction is carried out on PVPs monofunctionalized at one end with hydroxyl or carboxyl groups optionally in the form of methyl or ethyl esters, and mixtures of dicarboxylic acids and diols of respectively general formula HOOC-$R^1$-COOH and HO-$R^2$-OH where $R^1$ and $R^2$ have the aforementioned meanings.

With PVP containing a lactone function at one end, the preparation process consists of modifying a classic ring-opening lactone polymerisation process, using PVPs thus functionalised as macromonomers, alone or mixed with other lactones. With this method "comb" copolymers are obtained, in which the PVP chains protrude from a linear polyester chain, and the resultant product can be soluble or insoluble in water depending on PVP contents. This type of process is illustrated in example 2, wherein the ring opening polimeryzation is carried out on PVP terminating with $\gamma$-butyrolactone, in the presence of $\gamma$-butyrolactone.

The Applicant has now found a new process for preparing the comb grafted copolymers according to the present invention , said process allowing to insert the PVP segments in an already formed polyester chain , in particular PLGA commercially available.

This process is decidedly more economical than the previous one, since it allows to obtain the desired copolymer by carrying out only a polymerisation reaction.

Said process comprises effecting a chain transfer polymerisation with N-vinylpyrrolidone wherein in this case the chain transfer agent is the same PLGA.

In addition the Applicant has unexpectedly found that with this process it is possible to insert many polyvinylpyrrolidone chains with an average molecular weight lower than 10,000.

Such an excellent result is achieved by carrying out the aforementioned polymerisation reaction in the presence of a second transfer agent such as methylisobutyrate.

The present invention relates to the composition containing the segment copolymers according to the present invention in combination with therapeutically or cosmetically active ingredient or in alternative with dietary supplements.

The following examples are reported for illustrative but not limitative purposes

EXAMPLES

Example 1

Preparation of a polycondensate based on PVP of average numerical molecular weight 3500, succinic acid, glycerol and 1,6-hexanediol

1.1 Synthesis of a polyvinylpyrrolidone oligomer terminating at one end with a carboxyl group, hereinafter named PVP 2 COOH

*Starting materials:*

The starting materials used, and their respective quantities, are given in Table 1.

Table 1

| Starting materials used for the synthesis of a carboxylated PVP oligomer. | |
|---|---|
| N-vinylpyrrolidone (VP) | 26 ml |
| Methyl propionate | 1000 ml |
| Azodiisobutyronitrile (AIBN) | 810.3 mg |
| 2,6-di-*t*-butyl paracresol | 803 mg |

*Procedure*

a) Preparation of carboxylated PVP methyl ester (PVP 2 COOMe)

The methyl propionate and the VP are introduced into a 2 litre one-neck flask equipped with tap and magnetic stirrer, then de-aerated with 4 vacuum/$N_2$ cycles.
The AIBN is added under nitrogen flow and the temperature is thermostatically maintained at 70°C. The reaction is conducted under these conditions for 18 hours.
The heat source is removed and the *t*-butyl paracresol is added while hot and the reaction flask is left to cool to ambient temperature.
To recover the polymer, the reaction mixture volume is reduced to about 200 ml by Rotavapor then precipitated in 600 ml of cold ether under magnetic agitation. It is filtered through a Buckner funnel, dissolved in 100 ml of methylene chloride and re-precipitated under magnetic agitation in 300 ml cold $Et_2O$. It is filtered through a Buckner funnel and the PVP-COOMe polymer obtained is dried under nitrogen flow; the crude product is characterised by SEC (data is given in table 1).

b) Preparation of carboxylated PVP (PVP 2 COOH)

The PVP 2 COOMe polymer is dissolved in a 0.1 M aqueous sodium hydroxide solution with an excess in moles of sodium hydroxide of 5:1, and left for 16 hours under magnetic agitation. A 0.1 M HCl solution is then added until pH = 2.5.
The product is purified by Amicon ultrafiltration (3 passages through cellulose membrane with a nominal cut-off of 3000) and lyophilised. The final product is characterised by SEC (data is given in table 2)
Yield: 80.5%

Table 2

| Molecular weight data obtained by SEC for PVP 2 COOMe and PVP 2 COOH. | | | |
|---|---|---|---|
| Materials | Mn | Mw | Polydispersity index |
| PVP 2 COOMe | 2700 | 6200 | 2.30 |
| PVP 2 COOH | 3500 | 6900 | 1.97 |

1.2 Preparation of the Polycondensate

*Starting materials:*

The starting materials used, and their respective quantities, are given in Table 3.

Table 3

| Starting materials and their quantities used for preparing the polycondensate | | |
|---|---|---|
| Material | Moles | grams |
| PVP 2 COOH | 0.003 | 10.5 |
| Anhydrous glycerol | 0.20 | 18.4 |
| Succinic anhydride | 0.60 | 60.1 |
| 1,6-hexanediol | 0.60 | 70.9 |

When all additions are complete, the system contains 1.2003 moles of COOH (it is unimportant that the carboxyls are initially mostly "masked" as anhydride), and 1.8 moles of OH, of which 0.6 moles pertain to the trifunctional (glycerol). In Stockmayer's formula, p=0.332 and hence $r_c$= 0.751. The initial stoichiometric ratio is 0.667, lower than $r_c$. Therefore the system will provide a hyper-branched, but not cross-linked, product.

*Procedure*

a) The glycerol and the PVP 2 COOH are introduced into the reactor; a small drop of 98% sulphuric acid is added and the mixture is heated to 110°C in a closed container for 5 hours. This procedure transforms the PVP 2 COOH into its glycerol ester.

b) After cooling, the succinic anhydride is added to the preceding mixture and the system is placed under slight nitrogen pressure. It is re-heated to 100°C for 2 hours then a small drop of 98% sulphuric acid is again added. This procedure transforms the products which are present (excess glycerol and PVP 2 COOH glycerol ester) into the respective hemisuccinates. At this point the hexanediol is introduced under nitrogen flow.

The system now consists of a mixture of glycerol hemisuccinate (0.197 mol), PVP 2 COOH glycerol ester disuccinate (0.003 mol) and 1,6-hexanediol (0.60 mol).

Since trans-esterification reactions actively occur as well as esterification reactions, the means of addition do not affect the calculations (see above) but prevent any losses of glycerol in the initial phase thus favouring the complete insertion of PVP 2 COOH into the polymer structure which forms.

c) After adding hexanediol, the temperature is brought to 100° C, again under slight nitrogen pressure, for 16 hours. It is now left under nitrogen flow at 100°C for 1 hour, then under vacuum (0.2 tor) at 100°C for another 4 hours. This procedure serves to eliminate the by-product (water) bringing the reaction to completion.

d) At the end, the product is removed from the reactor while still molten. By cooling over time it solidifies to a waxy solid. The product re-swells in water, but does not dissolve. Instead, it is soluble in methanol, ethanol, chloroform and ethyl acetate. Its intrinsic viscosity in chloroform at 30°C is 0.23 dl/g.

Example 2

Preparation of a comb-copolymer, in which PVP segments of average numerical molecular weight of 3500 are grafted at one end to polyester chains.

2.1 Preparation of a PVP oligomer terminating with lactone function (PVP-γ-butyrolactone)

In a 2-neck flask, equipped with magnetic stirrer, refrigerator and a tube for nitrogen entry, N-vinyl-2-pyrrolidinone (2 g, 18.02 mmoles), γ-butyrolactone) (32 ml, 360 mmol) and AIBN (20 mg) are mixed. The solution is de-aerated via three successive evacuation cycles until a pressure of 25 mm Hg is attained then nitrogen is blown in. The reaction is then maintained under nitrogen atmosphere for 24 hours at 70°C, stirring constantly. After this period, the reaction is stopped by cooling to ambient temperature and the crude product is recovered by dissolving the solid residue obtained

in the minimum quantity of $CH_2Cl_2$ (3 ml) and then precipitating it in $Et_2O$. The white powdery precipitate obtained is recovered by decanting and dried by reduced pressure drying. The dried product is then dissolved in double distilled water (100 ml) and purified from monomer and lactide residues by repeated membrane ultrafiltration (AMICON) with a cut-off of 3000. The lower molecular weight fraction is discarded, while the higher molecular weight fraction (20 ml of residual solution) is recovered by lyophilising and conserved at ambient temperature. Yield: 1.8 g.

Average molecular weight determined by SEC: 3500. The transfer constant *Cr* is determined by using the equation:

$$C_T = \frac{\log\left(1-\frac{[M]_0}{[T]_0}\frac{\overline{Y_t}}{\overline{\overline{X_n}}}\right)}{\log\left(1-\overline{Y_t}\right)}$$

where $Y_t$ =conversion, $[M]_0$ monomer concentration at start time, $[T]_0$ =concentration of the transferer (i.e. D,L-lactide) at start time, and $\overline{\overline{X_n}}$ is average cumulative numerical degree of polymerisation. The value obtained is $1.7 \times 10^{-2}$.

2.2 Copolymerization of PVP-γ-butyrolactone with γ-butyrolactone by means of ring opening polymerisation.

PVP-γ (2g), γ-butyrolactone (4 g) and stannous di-octanoate (20 mg) are injected through a silicon septum into a 25 ml glass vial equipped with silcone septum, a lateral entry point connected to a tube for argon flow, a magnetic stirrer and maintained under constant argon flow. The reaction is then maintained under argon atmosphere for 24 hours at 100°C while being stirred constantly. After this period, the reaction is stopped by cooling to ambient temperature and the crude product is recovered by dissolving the semi-solid residue obtained in the minimum quantity of $CH_2Cl_2$ (5 ml) and then precipitating it in $ET_2O$. The white powdery precipitate obtained is recovered by decanting and dried by reduced pressure drying. The precipitation of $CH_2Cl_2$ in $Et_2O$ is repeated two more times. The final product appears as a white solid soluble in chlorinated solvents and re-swellable in water. Yield: 4.5 g. Average molecular weight determined by SEC: 35,000.

PVP chain content: 33% (w/w).

Example 3

A PLGA sample $M_n$=80000 (10 g) was dissolved in VP (20 ml) while stirring at room temperature under nitrogen atmosphere. AIBN (0.01 w/w with respect to the monomer) was added to the resulting viscous solution. The reaction mixture was gently heated up to 70°C and allowed to stand at this temperature for 24 hrs under occasional stirring. After this time, it was dissolved in dichloromethane and the solid product was recovered by precipitation with four volumes ether. After drying, the crude product was extracted several times with liberal amounts of water, until no trace of un-grafted PVP was observed

in the aqueous extracts. During each washing step, the product was maintained under stirring at 45°C. Yield = 12 g.

The final product was characterised by FT-IR, $^1H$ NMR and $^{13}C$ NMR spectroscopy. All spectroscopic data were in agreement with the proposed structure. Moreover, the quantitative $^1H$ NMR analysis indicated a PVP content equal to 27.2%.

Nitrogen content (elemental analysis)= 3.28%, in agreement with the NMR determination within the limit of the experimental error.

Apparent molecular weight (SEC): $M_n$= 96000, $M_w$= 103000.

Example 4

3.0 g of a finely powdered PLGA/PVP graft copolymer prepared according to example 3 were suspended in 100 ml 1 M NaOH aqueous solution. The suspension was stirred 7 days at room temperature. The polymer gradually dissolved. The resultant solution was acidified to pH 3 with dilute hydrochloric acid, freeze-dried, obtaining a white powder that was extracted several times with dichloromethane. The dichloromethane extracts were filtered and the total volume reduced to 50 ml by evaporation under vacuum. Finally, the addition of 250 ml of ether led to the precipitation of 0.73 g PVP, identified by IR and NMR.

SEC analysis gave the following results: $M_n$= 36,000, $M_w$= 58,000

Example 5

The same procedure as in Example 3 was followed, but with the addition of a 40 ml weight of methyl isobutyrate as additional chain transfer agent (E. Ranucci, M. Tarabic, M. Gilberti, A.-C. Albertsson, Macromol. Chem. Phys., 2001, 1219, 201). After 24 hours the reaction mixture was diluted with dichloromethane and treated as in example 1.

Nitrogen content (elemental analysis)= 2.65%, in agreement with the NMR (27% w/w) determination within the limit of the experimental error.

Apparent molecular weight (SEC): $M_n$= 82,000, $M_w$= 103,000.

Example 6

The same procedure as in Example 4 was followed, starting with the product obtained in Example 5. The PVP finally isolated (1 g) gave by SEC analysis the following results:
$M_n$= 3200, $M_w$= 7000.

## Claims

1. Segment copolymers comprising segments "A" having polyvinylpyrrolidone (PVP) structure and segments "B" having a polyester structure wherein the PVP segments have a weight average molecular weight between 600 and 15,000.

2. Segment copolymers as claimed in claim 1 in the form of linear A-B type copolymers.

3. Segment copolymers as claimed in claim 2 wherein the structure is of the type

$$PVP\text{-}COO\text{-}(R^3\text{-}COO)_nH,$$

or of the type:

$$PVP\text{-}(OOC\text{-}R^3)_nOH,$$

where n is a number between 5 and 500, and R is a linear or branched hydrocarbon chain containing from 1 to 12 carbon atoms.

4. Segment copolymers as claimed in claim 3 wherein n is comprised between 15 and 150, $R^3$ has from 1 to 6 carbon atoms.

5. Segment copolymers as claimed in claim 1 in the form of linear copolymers of A-B-A type.

6. Copolymers as claimed in claim 5 wherein the structure is of the type

$$PVP\text{-}COO\text{-}(R^1\text{-}OOCR^2COO)_n\text{-}R^1\text{-}OOC\text{-}PVP,$$

or of the type:

$$PVP\text{-}(OOC\text{-}R^1\text{-}COOR^2)_nOOCR^1COO\text{-}PVP$$

where n is a number between 5 and 300, and $R^1$ and $R^2$ can be equal or different, and are linear or branched hydrocarbon chains having from 1 to 25 carbon atoms.

7. Segment copolymers as claimed in claim 6 wherein n is comprised between 10 and 100 and $R^1$ and $R^2$ have from 1 to 8 carbon atoms.

8. Segment copolymers as claimed in claim 1 being branched or hyperbranched, wherein the PVP segments are located at the terminal ends of the branches.

**9.** Segment copolymers as claimed In claim 8, having the formula represented in Figure 1. wherein A is polyvinylpyrrolidone, D is the residue deriving from a polycarboxylic or polyol, wherein the hydroxy or carboxy functions are at least 3, (BC) indicate the repeating unit of the B polyester segment and n is comprised between 2 and 200.

**10.** Copolymers as claimed in claim 1 being in the form of branched or hyperbranched copolymers having located at the ends of the branches;

- PVP segments and residues derived from monocarboxylic acids R-COOH, or monohydroxylated alcohols of the R-OH type where R is a linear or branched hydrocarbon chain containing from 1 to 25 carbon atoms,
- PVP segments or residues derived from dicarboxylic acids HOOC-R-COOH or dihydroxylic alcohols of the HO-R-OH type where R is a linear or branched hydrocarbon chain as aforedefined.

**11.** Segment copolymers as claimed in claim 10, wherein R has from 1 to 8 atoms.

**12.** Segment copolymers as claimed in anyone of claims 10 and 11 as represented in Figure 2, wherein the A indicates the polyvinylpyrrolidone chains D is the residue deriving from a polycarboxylic or polyol, wherein the hydroxy or carboxy functions are at least 3, (BC) indicate the repeating unit of the B polyester segment n is comprised between 2 and 200, and E is the residue of a monofuctional alcohol.

**13.** Segment copolymers as claimed in anyone of claims 8 to 12, wherein the branching sites consist of polyol or polycarboxylic acid residues having a number of functions (hydroxyl or carboxyl respectively) between 3 and 12.

**14.** Segment copolymers as claimed in claim 13 wherein said number of function of the polyol or polycarboxylic acid is comprised between 3 and 6.

**15.** Segment copolymers as claimed in any one of claims 8-14, wherein the molar ratio between the number of branching sites and polyester fragments is comprised between 0.01 and 2,

**16.** Segment copolymers as claimed in claim 15, wherein said ratio is comprised between 0.1 and 1.5.

**17.** Segment copolymers as claimed in anyone of claims 8-15, wherein the molar ratio between the number of branching sites and PVP fragments is comprised between 0.01 and 100

**18.** Segment copolymers as claimed in claim 17 wherein said molar ratio is comprised between 0.1 and 10.

**19.** Segment copolymers as claimed in any one of claims 8-18 in cross-linked form.

**20.** Segment copolymers as claimed in claim 1 wherein the PVP segments are comb-grafted at one end onto polyester chains.

**21.** Segment copolymers as claimed in anyone of claims1-20 wherein said A (PVP) segment has a weight average molecular weight comprised between 1,000 and 6,000.

**22.** Segment copolymers as claimed in anyone of claims 1-21, having a PVP content by weight between 5% and 95%.

**23.** Segment copolymers as claimed in claim 22 wherein said PVP content is comprised between 10% and 50%.

**24.** Segment copolymers as claimed in anyone of claims 1-23, having a weight average molecular comprised between 10,000 and 1,000,000.

**25.** Segment copolymers as claimed in claim 24, wherein said average molecular weight is comprised between 20,000 and 200,000.

**26.** A process for preparing the copolymer as claimed in claim 2, comprising carrying out a polycondensation reaction on PVP terminated at one end with a hydroxy or carboxy function with respectively :

- a biacid or a bialcohol in the presence of a monoalcohol or a monocarboxylic acid or in alternative
- a hydroxy carboxylic acid optionally a cyclic derivative thereof,

with the proviso that ratio of total moles of OH function /total moles of COOH functions is =1.

**27.** The process according to claim 26 for preparing the copolymers of claim 3, comprising effecting polycondensation between PVPs monofunctionalized at one end with hydroxyl or carboxyl groups optionally in the form of methyl or ethyl esters, in the presence of hydroxycarboxylic acids of type
$HO\text{-}R^3\text{-}COOH$
where $R^3$ is a linear or branched hydrocarbon chain with between 1 and 12 carbon atoms.

**28.** The process according to claim 27, wherein $R^3$ has from 1 to 6 carbon atoms.

**29.** The process according to claim 27 for preparing the copolymers of claims 3, comprising effecting ring-opening polycondensation on PVP monofunctionalised at one end with hydroxyl or carboxyl groups optionally in the form of methyl or ethyl esters with cyclic derivatives selected from lactones, glycolides or lactides of the hydroxy acids of formula
$HO\text{-}R^3\text{-} COOH$
where $R^3$ is a linear or branched hydrocarbon chain with between 1 and 12 carbon atoms.

**30.** The process as claimed in claim 29, where $R^3$ has from 1 to 6 carbon atoms.

**31.** A process for preparing the copolymers as claimed in claim 5 comprising carrying out a polycondensation reaction on PVP terminated at one end with a hydroxy or carboxy function with a biacid or a bialcohol with the proviso that the ratio of total moles of OH function/total moles of COOH functions is =1.

**32.** The process as claimed in claim 31 for preparing the copolymers of claims 6 and 7, comprising effecting polycondensation reaction between PVPs monofunctionalized at one end with hydroxyl or carboxyl groups optionally in the form of methyl or ethyl esters, and mixtures of dicarboxylic acids and diols of respectively general formula $HOOC\text{-}R^1\text{-}COOH$ and $HO\text{-}R^2\text{-}OH$ where $R^1$ and $R^2$, equal or different, are linear or branched hydrocarbon chains containing from 1 to 25 carbon atoms.

**33.** The process according to claim 32 wherein $R^1$ and $R^2$ have from 1 to 8 carbon atoms.

**34.** A process for preparing the copolymers of claims 8 and 9, comprising effecting polycondensation of the mixtures in variable proportions of:

a) PVPs monofunctionalized at one end with hydroxyl or carboxyl groups optionally in the form of methyl or ethyl esters;
b) dicarboxylic acids and diols;
c) polyols or polycarboxylic acids having at least 3 hydroxyl or carboxyl functions, provided that
i), when said copolymers are not crosslinked
"$r$" is < $r_c$
ii) when said copolymers are crosslinked
"$r$" is > $r_c$

$r=Na_0/Nb_0$, $Na_0$ indicates the initial total number of hydroxy or carboxy function in defect, $Nb_0$ indicates the total initial number of carboxyl or hydroxy functions in excess,

$$r_c = \frac{1}{(f_{W,A}-1)(f_{W,B}-1)}$$

where $f_{W,A}$ and $f_{W,B}$ are the "weight" averages of the functionalities of the monomers present, including monoalcohol or monocarboxylic acid.

**35.** The process according to claim 34, wherein the diols and the diacids are of respectively general formula $HOOC\text{-}R^1\text{-}COOH$ and $HO\text{-}R^2\text{-}OH$, where $R^1$ and $R^2$, equal or different, are linear or branched hydrocarbon chains containing from 1 to 25 carbon atoms.

**36.** The process according to claim 35 wherein $R^1$ and $R^2$ have from 1 to 8 carbon atoms.

**37.** The process according to anyone of claims 34-36, wherein the polyols or polycarboxylic acids have respectively per molecule between 3 and 12 hydroxy or carboxy functions.

**38.** The process according to claim 37, wherein the polyols or polycarboxylic acids have respectively per molecule between 3 and 6 hydroxy or carboxy functions.

**39.** A process for preparing the copolymers as claimed in anyone of claims 10-12,comprising effecting a polycondensation of mixtures in various proportions of:

a) PVPs monofunctionalized at one end with hydroxyl or carboxyl groups optionally in the form of methyl or ethyl esters:
b) dicarboxylic acids and diols;
c) polyols or polycarboxylic acids having least 3 hydroxyl or carboxy functions
d) monocarboxylic acids of type R-COOH or monohydroxylated alcohols of type ROH, where R has the aforementioned meanings provided that:

i) when said copolymers are not crosslinked

$$\text{"}r\text{" is } < r_c$$

ii) when said copolymers are crosslinked

$$\text{"}r\text{" is } > r_c$$

$r=Na_0/Nb_0$, $Na_0$ indicates the initial total number of hydroxy or carboxy function in defect, $Nb_0$ indicates the total initial number of carboxy or hydroxy functions in excess,

$$r_c = \frac{1}{(f_{W,A}-1)(f_{W,B}-1)}$$

where $f_{W,A}$ and $f_{W,B}$ are the "weight" averages of the functionalities of the monomers present, including monoalcohol or monocarboxylic acid.

**40.** The process according to claim 39 wherein the diols and the diacids are of respectively general formula HOOC-$R^1$-COOH and HO-$R^2$-OH, where $R^1$ and $R^2$, equal or different, are linear or branched hydrocarbon chains containing from 1 to 25 carbon atoms.

**41.** The process according to claim 40, wherein $R^1$ and $R^2$ have from 1 to 8 carbon atoms.

**42.** The process according to anyone of claims 40 and 41, wherein the polyols or polycarboxylic acids have respectively per molecule between 3 and 12 hydroxy or carboxy functions.

**43.** The process as claimed in claim 42, wherein the polyols or polycarboxylic acids have respectively per molecule between 3 and 6 hydroxy or carboxy functions.

**44.** Process for preparing the copolymers of claim 20, comprising effecting ring-opening polymerisation of mixtures of PVP terminating at one end with a lactone, alone or optionally with the same or a different lactone from the previous one.

**45.** The process as claimed in claim 44, carried out on PVP terminating with γ-butyrolactone, in the presence of γ-butyrolactone.

**46.** A process for preparing the copolymers according to claim 20 comprising effecting a chain transfer polymerization reaction with N-vinyl pyrrolidone in the presence of PLGA as the chain transfer agent.

**47.** The process according to claim 46, further comprising a second chain transfer polymerization, wherein the chain transfer agent is methyl isobutyrate.

**48.** A composition comprising the segment copolymers according to anyone of claims 1-20, and an ingredient having therapeutic or cosmetic activity, or a dietary supplement.

**49.** Use of copolymers claimed in claims 1-26 for preparing blends with copolymers of poly(lactic-glycolic) acid (PLGA) of various molecular weight.

**Patentansprüche**

**1.** Segmentcopolymere enthaltend Segmente "A" mit einer Polyvinylpyrrolidon (PVP)-Struktur und Segmente "B" mit einer Polyester-Struktur, wobei die PVP-Segmente ein gewichtsgemitteltes Molekulargewicht zwischen 600 und 15.000 aufweisen.

**2.** Segmentcopolymere nach Anspruch 1 in der Form von linearen Copolymeren vom Typ A-B.

**3.** Segmentcopolymere nach Anspruch 2, wobei die Struktur von dem Typ: $PVP\text{-}COO\text{-}(R^3\text{-}COO)_nH$ ist
oder von dem Typ:

$$PVP\text{-}(OOC\text{-}R^3)_nOH$$

ist,
worin n eine Zahl zwischen 5 und 500 ist, und, worin R eine lineare oder verzweigte Kohlenwasserstoffkette ist, welche zwischen 1 und 12 Kohlenstoffatome aufweist.

**4.** Segmentcopolymere nach Anspruch 3, wobei n zwischen 15 und 150 liegt und $R^3$ zwischen 1 und 6 Kohlenstoffatome aufweist.

**5.** Segmentcopolymere nach Anspruch 1 in der Form von linearen Copolymeren des Typs A-B-A.

**6.** Segmentcopolymere nach Anspruch 5, wobei die Struktur von dem Typ: $PVP\text{-}COO\text{-}(R^1\text{-}OOCR^2COO)_n\text{-}R^1\text{-}OOC\text{-}PVP$ ist
oder von dem Typ:

$PVP\text{-}(OOC\text{-} R^1\text{-}COOR^2)_nOOCR^1COO\text{-}PVP$ ist,
worin n eine Zahl zwischen 5 und 300 ist, und worin $R^1$ und $R^2$ gleich oder verschieden sein können und lineare oder verzweigte Kohlenwasserstoffketten mit 1 bis 25 Kohlenstoffatomen sind.

**7.** Segmentcopolymere nach Anspruch 6, wobei n zwischen 10 und 100 liegt und $R^1$ und $R^2$ zwischen 1 und 8 Kohlenstoffatome aufweisen.

**8.** Segmentcopolymere nach Anspruch 1, welche verzweigt oder hyperverzweigt sind, wobei die PVP-Segmente an den terminalen Enden der Verzweigungen lokalisiert sind.

**9.** Segmentcopolymere nach Anspruch 8 mit der in der Figur 1 wiedergegebenen Formel, wobei A Polyvinylpyrrolidon ist, D ein Rest abgeleitet von einer Polycarbonsäure oder von einem Polyol ist, wobei die Hydroxy- oder Carboxy-Funktionen wenigstens 3 betragen, wobei (BC) die Wiederholungseinheit des B-Polyestersegments angibt und n zwischen 2 und 200 liegt.

**10.** Copolymere nach Anspruch 1, welche in der Form von verzweigten oder hyperverzweigten Copolymeren vorliegen, welche an den Enden der Verzweigungen lokalisiert aufweisen:

- PVP-Segmente und -Reste abgeleitet von Monocarbonsäuren R-COOH oder von monohydroxylierten Alkoholen des R-OH-Typs, worin R eine lineare oder verzweigte Wasserstoffkette ist, welche zwischen 1 und 25 Kohlenstoffatome aufweist,
- PVP-Segmente oder -Reste abgeleitet von Dicarbonsäuren HOOC-R-COOH oder von Dihydroxyalkoholen des HO-R-OH-Typs, worin R eine wie zuvor definierte lineare oder verzweigte Kohlenwasserstoffkette ist.

**11.** Segmentcopolymere nach Anspruch 10, wobei R zwischen 1 und 8 Kohlenstoffatome aufweist.

**12.** Segmentcopolymere nach einem der Ansprüche 10 oder 11, wie in der Figur 2 dargestellt, worin das A Polyvinylpyrrolidonketten bedeutet und D der von einer Polycarbonsäure oder von einem Polyol abgeleitete Rest ist, wobei die Hydroxy- oder Carboxy-Funktionen wenigstens 3 betragen, (BC) die Wiederholungseinheit des B-Polyestersegments bedeutet, n zwischen 2 und 200 beträgt und E der Rest eines monofunktionellen Alkohols ist.

**13.** Segmentcopolymere nach einem der Ansprüche 8 bis 12, wobei die Verzweigungsstellen aus Polyol- oder Polycarbonsäureresten mit einer Anzahl von Funktionen (Hydroxyl bzw. Carboxyl) zwischen 3 und 12 bestehen.

**14.** Segmentcopolymere nach Anspruch 13, wobei die Anzahl der Funktionen des Polyols oder der Polycarbonsäure zwischen 3 und 6 liegt.

**15.** Segmentcopolymere nach einem der Ansprüche 8 bis 14, wobei das molare Verhältnis zwischen der Anzahl der Verzweigungsstellen und der Polyesterfragmente zwischen 0,01 und 2 liegt.

**16.** Segmentcopolymere nach Anspruch 15, wobei das Verhältnis zwischen 0,1 und 1, 5 liegt.

**17.** Segmentcopolymere nach einem der Ansprüche 8 bis 15, wobei das molare Verhältnis zwischen der Anzahl der Verzweigungsstellen und der PVP-Fragmente zwischen 0,01 und 100 liegt.

**18.** Segmentcopolymere nach Anspruch 17, wobei das molare Verhältnis zwischen 0,1 und 10 liegt.

**19.** Segmentcopolymere nach einem der Ansprüche 8 bis 18 in vernetzter Form.

**20.** Segmentcopolymere nach Anspruch 1, wobei die PVP-Segmente an einem Ende auf Polyesterketten gepfropft sind.

**21.** Segmentcopolymere nach einem der Ansprüche 1 bis 20, wobei das A (PVP)-Segment ein gewichtsgemitteltes Molekulargewicht zwischen 1.000 und 6.000 aufweist.

**22.** Segmentcopolymere nach einem der Ansprüche 1 bis 21 mit einem PVP-Gehalt pro Gewicht zwischen 5 % und 95 %.

**23.** Segmentcopolymere nach Anspruch 22, wobei der PVP-Gehalt zwischen 10 % und 50 % liegt.

**24.** Segmentcopolymere nach einem der Ansprüche 1 bis 23 mit einem gewichtsgemittelten Molekulargewicht zwischen 10.000 und 1.000.000.

**25.** Segmentcopolymere nach Anspruch 24, wobei das gewichtsgemittelte Molekulargewicht zwischen 20.000 und 200.000 liegt.

**26.** Verfahren zum Herstellen eines Copolymers nach Anspruch 2 umfassend das Durchführen einer Polykondensationsreaktion an PVP, das an einem Ende mit einer Hydroxy- oder Carboxy-Funktion terminiert ist, mit jeweils:

- einer Bisäure oder einem Bialkohol in der Gegenwart eines Monoalkohols oder einer Monocarbonsäure oder alternativ dazu:
- einer Hydroxycarbonsäure optional einem zyklischen Derivat hiervon,

mit der Maßgabe, dass das Verhältnis der Gesamtmole von OH-Funktion/Gesamtmole von COOH-Funktion gleich 1 beträgt.

**27.** Verfahren nach Anspruch 26 zum Herstellen von Copolymeren nach Anspruch 3 umfassend das Bewirken einer Polykondensation zwischen PVP, das an einem Ende mit Hydroxyl- oder Carboxyl-Gruppen optional in der Form

von Methyl- oder Ethylestern monofunktionalisiert ist, in der Gegenwart von Hydroxycarbonsäuren des Typs

$HO-R^3-COOH$,

worin $R^3$ eine lineare oder verzweigte Kohlenwasserstoffkette mit zwischen 1 und 12 Kohlenstoffatomen ist.

**28.** Verfahren nach Anspruch 27, wobei $R^3$ zwischen 1 und 6 Kohlenstoffatome aufweist.

**29.** Verfahren nach Anspruch 27 zum Herstellen eines Copolymers nach Anspruch 3 umfassend das Bewirken einer Ringöffnungspolykondensation an PVP, das an einem Ende mit Hydroxyl- oder Carboxyl-Gruppen optional in der Form von Methyl- oder Ethylestern monofunktionalisiert ist, mit zyklischen Derivaten ausgewählt von Lactonen, Glykoliden oder Lactiden der Hydroxysäuren gemäß der Formel

$HO-R^3-COOH$,

worin $R^3$ eine lineare oder verzweigte Kohlenwasserstoffkette mit zwischen 1 und 12 Kohlenstoffatomen ist.

**30.** Verfahren nach Anspruch 29, wobei $R^3$ zwischen 1 und 6 Kohlenstoffatome aufweist.

**31.** Verfahren zum Herstellen von Copolymeren nach Anspruch 5 umfassend das Durchführen einer Polykondensationsreaktion an PVP, das an einem Ende mit einer Hydroxy- oder Carboxy-Funktion terminiert ist, mit einer Bisäure oder mit einem Bialkohol, mit der Maßgabe, dass das Verhältnis der Gesamtmole von OH-Funktion zu den Gesamtmolen von COOH-Funktionen gleich 1 beträgt.

**32.** Verfahren nach Anspruch 31 zum Herstellen von Copolymeren nach Anspruch 6 oder 7 umfassend das Bewirken einer Polykondensationsreaktion zwischen PVP, das an einem Ende mit Hydroxyl- oder Carboxyl-Gruppen optional in der Form von Methyl- oder Ethylestern monofunktionalisiert ist, und Mischungen von Dicarbonsäuren und Diolen mit der allgemeinen Formel $HOOC-R^1-COOH$ bzw. $HO-R^2-OH$, worin $R^1$ und $R^2$, gleich oder verschieden, lineare oder verzweigte Kohlenwasserstoffketten sind, welche zwischen 1 und 25 Kohlenstoffatome aufweisen.

**33.** Verfahren nach Anspruch 32, wobei $R^1$ und $R^2$ 1 bis 8 Kohlenstoffatome aufweisen.

**34.** Verfahren zum Herstellen von Copolymeren nach Anspruch 8 oder 9 umfassend das Bewirken einer Polykondensation von Mischungen in variablen Verhältnissen von:

a) PVP monofunktionalisiert an einem Ende mit Hydroxyl- oder Carboxyl-Gruppen optional in der Form von Methyl- oder Ethylestern,
b) Dicarbonsäuren und Diolen,
c) Polyolen oder Polycarbonsäuren mit wengistens 3 Hydroxyl- oder Carboxyl-Funktionen, mit der Maßgabe, dass

i), wenn die Copolymere nicht vernetzt sind,
"r" < $r_c$ ist,
ii) wenn die Copolymere vernetzt sind,
"r" > $r_c$ ist, wobei

$r=Na_0/Nb_0$, wobei $Na_0$ die anfängliche Gesamtzahl der Hydroxy- oder Carboxy-Funktion im Unterschuss angibt, Nbo die anfängliche Gesamtzahl an Carboxy- oder Hydroxy-Funktionen im Überschuss angibt,

$$r_c = \frac{1}{(f_{W,A} - 1)(f_{W,B} - 1)}$$

worin $f_{W,A}$ und $f_{W,B}$ die "Gewichts"-Durchschnittswerte der Funktionalitäten der vorhandenen Monomere einschließlich Monoalkohol oder Monocarbonsäure sind.

**35.** Verfahren nach Anspruch 34, wobei die Diole und die Disäuren gemäß der allgemeinen Formel $HOOC-R^1-COOH$

bzw. $HO-R^2-OH$ sind, worin $R^1$ und $R^2$, gleich oder verschieden, lineare oder verzweigte Kohlenwasserstoffketten sind, welche zwischen 1 und 25 Kohlenstoffatome aufweisen.

**36.** Verfahren nach Anspruch 35, wobei $R^1$ und $R^2$ zwischen 1 und 8 Kohlenstoffatome aufweisen.

**37.** Verfahren nach einem der Ansprüche 34 bis 36, wobei die Polyole oder Polycarbonsäuren jeweils pro Molekül zwischen 3 und 12 Hydroxy- oder Carboxy-Funktionen aufweisen.

**38.** Verfahren nach Anspruch 37, wobei die Polyole oder Polycarbonsäuren jeweils pro Molekül zwischen 3 und 6 Hydroxy- oder Carboxy-Funktionen aufweisen.

**39.** Verfahren zum Herstellen von Copolymeren nach einem der Ansprüche 10 bis 12 umfassend das Bewirken einer Polykondensation von Mischungen in verschiedenen Verhältnissen von:

a) PVP monofunktionalisiert an einem Ende mit Hydroxyl- oder Carboxyl-Gruppen optional in der Form von Methyl- oder Ethylestern,
b) Dicarbonsäuren und Diolen,
c) Polyolen oder Polycarbonsäuren mit wengistens 3 Hydroxyl- oder Carboxy-Funktionen,
d) Monocarbonsäuren des Typs R-COOH oder von monohydroxylierten Alkoholen des Typs ROH, worin R die vorgenannte Bedeutungen aufweist, mit der Maßgabe, dass

i), wenn die Copolymere nicht vernetzt sind,
"r" < $r_c$ ist,
ii) wenn die Copolymere vernetzt sind,
"r" > $r_c$ ist, wobei
$r=Na_0/Nb_0$, wobei $Na_0$ die anfängliche Gesamtzahl der Hydroxy- oder Carboxy-Funktion im Unterschuss angibt, Nbo die anfängliche Gesamtzahl an Carboxy- oder Hydroxy-Funktionen im Überschuss angibt,

$$r_c = \frac{1}{(f_{W,A} - 1)(f_{W,B} - 1)}$$

worin $f_{W,A}$ und $f_{W,B}$ die "Gewichts"-Durchschnittswerte der Funktionalitäten der vorhandenen Monomere einschließlich Monoalkohol oder Monocarbonsäure sind.

**40.** Verfahren nach Anspruch 39, wobei die Diole und die Disäuren gemäß der allgemeinen Formel $HOOC-R^1-COOH$ bzw. $HO-R^2OH$ sind, worin $R^1$ und $R^2$, gleich oder verschieden, lineare oder verzweigte Kohlenwasserstoffketten sind, welche zwischen 1 und 25 Kohlenstoffatome aufweisen.

**41.** Verfahren nach Anspruch 40, wobei $R^1$ und $R^2$ zwischen 1 und 8 Kohlenstoffatome aufweisen.

**42.** Verfahren nach einem der Ansprüche 40 oder 41, wobei die Polyole oder die Polycarbonsäuren jeweils pro Molekül zwischen 3 und 12 Hydroxy- oder Carboxy-Funktionen aufweisen.

**43.** Verfahren nach Anspruch 42, wobei die Polyole oder Polycarbonsäuren jeweils pro Molekül zwischen 3 und 6 Hydroxy- oder Carboxy-Funktionen aufweisen.

**44.** Verfahren zum Herstellen von Copolymeren nach Anspruch 20, umfassend das Bewirken einer Ringöffnungspolymerisation von Mischungen von PVP terminiert an einem Ende mit einem Lakton, alleine oder optional mit demselben oder einem von den vorherigen verschiedenen Lakton.

**45.** Verfahren nach Anspruch 44, welches in der Gegenwart von γ-Butyrolacton an PVP durchgeführt wird, welches mit γ-Butyrolacton terminiert wird.

**46.** Verfahren zum Herstellen von Copolymeren nach Anspruch 20 umfassend das Bewirken einer Ringtransferpolymerisationsreaktion mit N-Vinylpyrrolidon in der Gegenwart von PLGA als Kettentransfermittel.

**47.** Verfahren nach Anspruch 46, des Weiteren umfassend eine zweite Kettentransferpolymerisation, wobei das Kettentransfermittel Methylisobutyrat ist.

**48.** Zusammensetzung umfassend Segmentcopolymere nach einem der Ansprüche 1 bis 20 sowie einen Bestandteil mit therapeutischer oder kosmetischer Aktivität oder ein Nahrungsergänzungsmittel.

**49.** Verwendung von Copolymeren nach einem der Ansprüche 1 bis 26 zum Herstellen von Mischungen aus Copolymeren von Poly(lactidglykolid)säure (PLGA) mit verschiedenem Molekulargewicht.

**Revendications**

**1.** Copolymères en segments comprenant des segments "A" ayant une structure de polyvinylpyrrolidone (PVP) et des segments "B" ayant une structure de polyester où les segments de PVP ont un poids moléculaire moyen en poids compris entre 600 et 15000.

**2.** Copolymères en segments selon la revendication 1 sous la forme de copolymères linéaires du type A-B.

**3.** Copolymères en segments selon la revendication 2 où la structure est du type

$$PVP\text{-}COO\text{-}(R^3\text{-}COO)_nH,$$

ou du type:

$$PVP\text{-}(OOC\text{-}R^3)_nOH,$$

où n est un nombre compris entre 5 et 500, et R est une chaîne d'hydrocarbure linéaire ou ramifiée contenant de 1 à 12 atomes de carbone.

**4.** Copolymères en segments selon la revendication 3 où n est compris entre 15 et 150, $R^3$ a de 1 à 6 atomes de carbone.

**5.** Copolymères en segments selon la revendication 1 sous la forme de copolymères linéaires du type A-B-A.

**6.** Copolymères selon la revendication 5 où la structure est du type:

$$PVP\text{-}COO\text{-}(R^1\text{-}OOCR^2COO)_n\text{-}R^1\text{-}OOC\text{-}PVP,$$

ou du type:

$$PVP\text{-}(OOC\text{-}R^1\text{-}COOR^2)_nOOCR^1COO\text{-}PVP$$

où n est un nombre compris entre 5 et 300 et $R^1$ et $R^2$ peuvent être égaux ou différents et sont des chaînes d'hydrocarbure linéaires ou ramifiées ayant de 1 à 25 atome de carbone.

**7.** Copolymères en segments selon la revendication 6 où n est compris entre 10 et 100 et $R^1$et $R^2$ ont de 1 à 8 atomes de carbone.

**8.** Copolymères en segments selon la revendication 1 qui sont ramifiés ou hyper-ramifiés, où les segments de PVP sont placés aux extrémités terminales des ramifications.

**9.** Copolymères en segments selon la revendication 8, ayant la formule représentée à la Figure 1, où A est de la polyvinylpyrrolidone, D est le résidu dérivant d'un poycarboxylique ou polyol, où les fonctions hydroxy ou carboxy sont d'au moins 3, (BC) indique l'unité récurrente du segment de polyester B et n est compris entre 2 et 200.

**10.** Copolymères selon la revendication 1 qui sont sous la forme de copolymères ramifiés ou hyper-ramifiés ayant aux extrémités des ramifications:

- des segments de PVP et résidus dérivés d'acides monocarboxyliques R-COOH, ou d'alcools monohydroxylés

du type R-OH où R est une chaîne d'hydrocarbure linéaire ou ramifiée contenant de 1 à 25 atomes de carbone,
- des segments de PVP ou résidus dérivés d'acides carboxyliques HOOC-R-COOH ou d'alcools dihydroxyliques du type HO-R-OH où R est une chaîne d'hydrocarbure linéaire ou ramifiée telle que définie ci-dessus.

**11.** Copolymères en segments tels que revendiqués à la revendication 10, où R a de 1 à 8 atomes de carbone.

**12.** Copolymères en segments selon l'une quelconque des revendications 10 et 11 comme représentés à la figure 2, où le A indique les chaînes de polyvinylpyrrolidone D est le résidu dérivant d'un polycarboxylique ou polyol, où les fonctions hydroxy ou carboxy sont d'au moins 3, (BC) indique l'unité récurrente du segment de polyester B n est compris entre 2 et 200, et E est le résidu d'un alcool monofonctionnel.

**13.** Copolymères en segments selon l'une quelconque des revendications 8 à 12, où les sites de ramification consistent en résidus de polyol ou d'acide carboxylique ayant un nombre de fonctions (hydroxyle ou carboxyle respectivement) compris entre 3 et 12.

**14.** Copolymères en segments selon la revendication 13 où ledit nombre de fonctions du polyol ou de l'acide polycarboxylique est compris entre 3 et 6.

**15.** Copolymères en segments selon l'une quelconque des revendications 8-14, où le rapport molaire entre le nombre de sites de ramification et les fragments de polyester est compris entre 0,01 et 2.

**16.** Copolymères en segments selon la revendication 15, où ledit rapport est compris entre 0,1 et 1,5.

**17.** Copolymères en segments selon l'une quelconque des revendications 8-15, où le rapport molaire entre le nombre de sites de ramification et les fragments de PVP est compris entre 0,01 et 100.

**18.** Copolymères en segments selon la revendication 17 où ledit rapport molaire est compris entre 0,1 et 10.

**19.** Copolymères en segments selon l'une quelconque des revendications 8-18 sous forme réticulée.

**20.** Copolymères en segments selon la revendication 1 où les segments de PVP sont greffés en peigne à une extrémité sur des chaînes de polyester.

**21.** Copolymères en segments selon l'une quelconque des revendications 1-20 où ledit segment A (PVP) a un poids moléculaire moyen en poids compris entre 1000 et 6000.

**22.** Copolymères en segments selon l'une quelconque des revendications 1-21, ayant une teneur en PVP en poids entre 5% et 95%.

**23.** Copolymères en segments selon la revendication 22 où ladite teneur en PVP est comprise entre 10% et 50%.

**24.** Copolymères en segments selon l'une quelconque des revendications 1-23, ayant un poids moléculaire moyen en poids compris entre 10 000 et 1 000 000.

**25.** Copolymères en segments selon la revendication 24, où ledit poids moléculaire moyen est compris entre 20 000 et 200 000.

**26.** Procédé pour la préparation du copolymère selon la revendication 2, comprenant la mise en oeuvre d'une réaction de polycondensation sur PVP terminé à une extrémité par une fonction hydroxy ou carboxy avec respectivement:

- un biacide ou un bialcool en présence d'un monoalcool ou d'un acide monocarboxylique ou en alternative
- un acide hydroxy carboxylique facultativement un dérivé cyclique de celui-ci,

à condition que le rapport des moles totales de fonction OH/ moles totales des fonctions COOH soit = 1.

**27.** Procédé selon la revendication 26 pour la préparation des copolymères de la revendication 3, consistant à effectuer la polycondensation entre des PVP monofonctionnalisés à une extrémité par des groupes hydroxyles ou carboxyles facultativement sous la forme d'esters méthyliques ou éthyliques, en présence d'acides hydroxycarboxyliques du type

$HO-R^3-COOH$

où $R^3$ est une chaîne d'hydrocarbure linéaire ou ramifiée ayant entre 1 et 12 atomes de carbone.

**28.** Procédé selon la revendication 27, où $R^3$ a de 1 à 6 atomes de carbone.

**29.** Procédé selon la revendication 27 pour la préparation des copolymères de la revendication 3, consistant à effectuer une polycondensation par décyclisation sur PVP monofonctionnalisé à une extrémité par des groupes hydroxyles ou carboxyles facultativement sous la forme d'esters méthyliques ou éthyliques avec des dérivés cycliques sélectionnés parmi les lactones, les glycolides ou les lactides des hydroxy acides de la formule $HO-R^3-COOH$ où $R^3$ est une chaîne d'hydrocarbure linéaire ou ramifiée ayant entre 1 et 12 atomes de carbone.

**30.** Procédé selon la revendication 29, où $R^3$ a de 1 à 6 atomes de carbone.

**31.** Procédé pour la préparation des copolymères selon la revendication 5 comprenant la mise en oeuvre d'une réaction de polycondensation sur PVP terminé à une extrémité par une fonction hydroxy ou carboxy avec un biacide ou un bialcool à condition que le rapport des moles totales de la fonction OH/ moles totales des fonctions COOH soit = 1.

**32.** Procédé selon la revendication 31 pour la préparation des copolymères des revendications 6 et 7, consistant à effectuer une réaction de polycondensation entre des PVP monofonctionnalisés à une extrémité avec des groupes hydroxyles ou carboxyles facultativement sous la forme d'esters méthyliques ou éthyliques, et des mélanges d'acides dicarboxyliques et de diols respectivement de la formule générale $HOOC-R^1-COOH$ et $HO-R^2-OH$ où $R^1$ et $R^2$, égaux ou différents, sont des chaînes d'hydrocarbure linéaires ou ramifiées contenant de 1 à 25 atomes de carbone.

**33.** Procédé selon la revendication 32 où $R^1$ et $R^2$ ont de 1 à 8 atomes de carbone.

**34.** Procédé pour la préparation des copolymères des revendications 8 et 9, consistant à effectuer la polycondensation des mélanges à des proportions variables de:

a) des PVP monofonctionnalisés à une extrémité avec des groupes hydroxyles ou carboxyles facultativement sous la forme d'esters méthyliques ou éthyliques;
b) des acides dicarboxyliques et des diols;
c) des polyols ou des acides carboxyliques ayant au moins 3 fonctions hydroxyles ou carboxyles, à condition que:

i) quand lesdits polymères ne sont pas réticulés,
"$r$" soit $<r_c$
ii) quand lesdits polymères sont réticulés
"$r$" soit $>r_c$
$r=Na_o/Nb_o$, $Na_o$ indique le nombre total initial de fonction hydroxy ou carboxy en défaut, $Nb_o$ indique le nombre total initial de fonctions hydroxy et carboxy en excès

$$r_c = \frac{1}{(f_{wA}-1)(f_{wB}-1)}$$

où $f_{wA}$ et $f_{wB}$ sont les moyennes "en poids" des fonctionnalités des monomères présents, comprenant le monoalcool ou l'acide monocarboxylique.

**35.** Procédé selon la revendication 34, où les diols et les diacides sont respectivement de la formule générale $HOOC-R^1-COOH$ et $HO-R^2-OH$, où $R^1$ et $R^2$, égaux ou différents, sont des chaînes d'hydrocarbure linéaires ou ramifiées contenant de 1 à 25 atomes de carbone.

**36.** Procédé selon la revendication 35 où $R^1$ et $R^2$ ont de 1 à 8 atomes de carbone.

**37.** Procédé selon l'une quelconque des revendications 34-36, où les polyols ou les acides polycarboxyliques ont respectivement par molécule entre 3 et 12 fonctions hydroxy ou carboxy.

**38.** Procédé selon la revendication 37, où les polyols ou les acides polycarboxyliques ont respectivement par molécule entre 3 et 6 fonctions hydroxy ou carboxy.

**39.** Procédé pour la préparation des copolymères selon l'une quelconque des revendications 10 - 12, consistant à effectuer une polycondensation de mélanges à diverses proportions de:

a) des PVP monofonctionnalisés à une extrémité avec des groupes hydroxyles ou carboxyles facultativement sous la forme d'esters méthyliques ou éthyliques;
b) des acides dicarboxyliques et des diols;
c) des polyols ou des acides carboxyliques ayant au moins 3 fonctions hydroxyles ou carboxy,
d) des acides monocarboxyliques du type R-COOH ou des alcools monohydroxylés du type ROH, où R a les significations ci-dessus à condition que:

i) quand lesdits polymères ne sont pas réticulés,
"$r$" soit $<r_c$
ii) quand lesdits polymères sont réticulés
"$r$" soit $>r_c$
$r=Na_o/Nb_o$, $Na_o$ indique le nombre total initial de fonction hydroxy ou carboxy en défaut, $Nb_o$ indique le nombre total initial de fonctions hydroxy et carboxy en excès,

$$r_c = \frac{1}{(f_{wA}-1)(f_{wB}-1)}$$

où $f_{wA}$ et $f_{wB}$ sont les moyennes "en poids" des fonctionnalités des monomères présents, comprenant le monoalcool ou l'acide monocarboxylique.

**40.** Procédé selon la revendication 39 où les diols et les diacides sont respectivement de la formule générale HOOC-$R^1$-COOH et HO-$R^2$-OH, où $R^1$ et $R^2$, égaux ou différents, sont des chaînes d'hydrocarbure linéaires ou ramifiées contenant de 1 à 25 atomes de carbone.

**41.** Procédé selon la revendication 40, où $R^1$ et $R^2$ ont de 1 à 8 atomes de carbone.

**42.** Procédé selon l'une quelconque des revendications 40 et 41, où les polyols ou les acides polycarboxyliques ont respectivement par molécule entre 3 et 12 fonctions hydroxy ou carboxy.

**43.** Procédé selon la revendication 42, où les polyols ou les acides polycarboxyliques ont respectivement par molécule entre 3 et 6 fonctions hydroxy ou carboxy.

**44.** Procédé pour la préparation des copolymères de la revendication 20, consistant à effectuer une polymérisation par décyclisation des mélanges de PVP se terminant à une extrémité par une lactone, seule ou facultativement avec une lactone identique ou différente par rapport à la précédente.

**45.** Procédé selon la revendication 44, effectué sur PVP se terminant par de la $\gamma$-butyrolactone, en présence de $\gamma$-butyrolactone.

**46.** Procédé pour la préparation des copolymères selon la revendication 20, consistant à effectuer une réaction de polymérisation par transfert de chaîne avec de la N-vinyl pyrrolidone en présence de PLGA en tant qu'agent de transfert de chaîne.

**47.** Procédé selon la revendication 46, comprenant de plus une seconde polymérisation par transfert de chaîne, où l'agent de transfert de chaîne est de l'isobutyrate de méthyle.

**48.** Composition comprenant les copolymères en segments selon l'une quelconque des revendications 1-20, et un ingrédient ayant une activité thérapeutique ou cosmétique, ou un complément diététique.

**49.** Utilisation des copolymères selon les revendications 1-26 pour la préparation de mélanges avec des copolymères d'acide poly(lacto-glycolique) (PLGA) de divers poids moléculaire.

FIG. 1

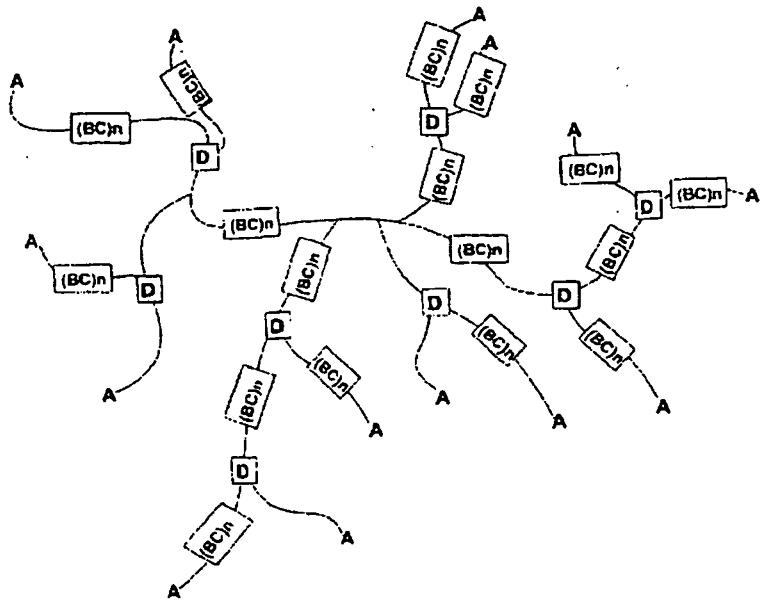


FIG. 2

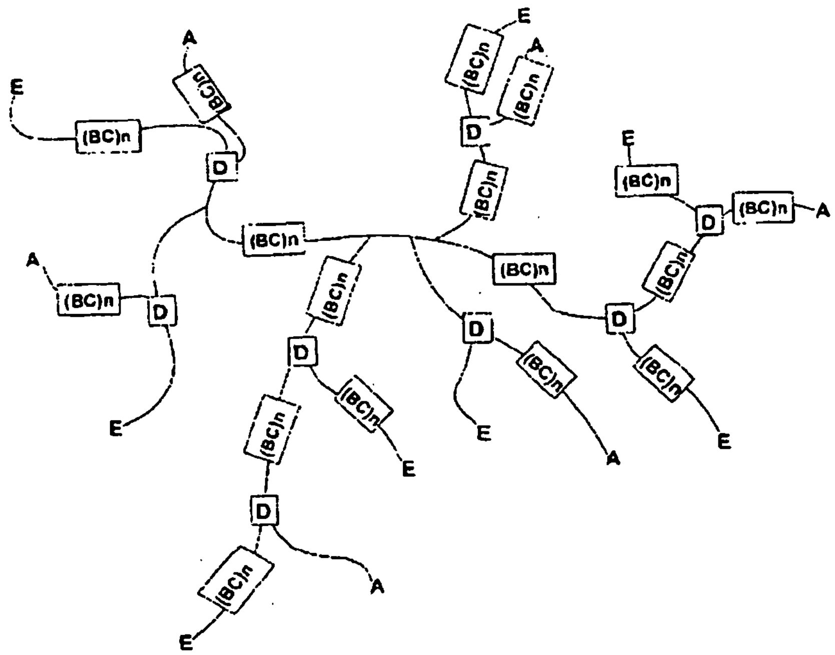

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4526958 A

### Non-patent literature cited in the description


- **F. M. VERONESE ; L. SARTORE ; P. CALICETI ; O. SCHIAVON ; E. RANUCCI ; P. FERRUTI.** *J. Bioact. Compat. Polym.,* 1990, vol. 5, 167
- **P.CALICETI ; O. SCHIAVON ; F.M. VERONESE ; L. SARTORE ; E. RANUCCI ; R. FERRUTI.** *J. Bioact. Compat. Polym.,* 1995, vol. 10, 103
- **E. RANUCCI ; G. SPAGNOLI ; F. BIGNOTTI ; L. SARTORE ; P. FERRUTI ; P. CALICETI ; O. SCHIAVON ; F.M. VERONESE.** *Macromol. Chem. Phys.,* 1995, vol. 196, 763
- **M. TARABIC ; E. RANUCCI.** *Macromol. Biosci.,* 2001, vol. 1, 126
- **G. ODIAN.** Principles of Polymerization. John Wiley & Sons, 1991
- **E. RANUCCI ; M. TARABIC ; M. GILBERTI ; A.-C. ALBERTSSON.** *Macromol. Chem. Phys.,* 2001, vol. 1219, 201